Europäisches Patentamt

(19) European Patent Office

Office européen des brevets

(11) **EP 0 928 118 A1**

(12) **EUROPEAN PATENT APPLICATION**
published in accordance with Art. 158(3) EPC

(43) Date of publication:
**07.07.1999 Bulletin 1999/27**

(51) Int. Cl.$^6$: **H04Q 7/22**

(21) Application number: **98919597.9**

(86) International application number:
**PCT/JP98/02131**

(22) Date of filing: **14.05.1998**

(87) International publication number:
**WO 98/52369 (19.11.1998 Gazette 1998/46)**

(84) Designated Contracting States:
**DE**

(30) Priority: **14.05.1997 JP 12417197**

(71) Applicant:
**KABUSHIKI KAISHA TOSHIBA**
**Kawasaki-shi, Kanagawa-ken 210-0913 (JP)**

(72) Inventors:
• **SHINOHARA, Tomoyuki**
**Tokorozawa-shi, Saitama 359-0021 (JP)**

• **SAWA, Buntaro**
**Sagamihara-shi, Kanagawa 229-1103 (JP)**
• **MOMOTA, Kazuhiro**
**Tachikawa-shi, Tokyo 190-0002 (JP)**

(74) Representative:
**Waldren, Robin Michael et al**
**MARKS & CLERK,**
**57-60 Lincoln's Inn Fields**
**London WC2A 3LS (GB)**

(54) **WIRELESS TELEPHONE DEVICE AND METHOD FOR ITS CONTROL**

(57) A wireless telephone device and method for its control by which a base station which is most advantageous in view of position registration or line connection can be selected in consideration of the propagation loss by a terminal. A transmission output information signal representing the transmission output level of the base station is added to the control signal which is transmitted from the base station to a mobile device which corrects the RSSI level of the received wave in accordance with the transmission output information signal and selects a base station which is most advantageous in view of the position registration or the line connection. Thus, the propagation loss is taken into account in this selection.

FIG.2

EP 0 928 118 A1

## Description

TECHNICAL FIELD

The present invention relates to a wireless telephone device which communicates by registering position or connecting a line from a wireless mobile terminal to a closest base station, and its control method, and more particularly to a wireless telephone device which can select the optimum base station when registering position or connecting a line from a wireless mobile terminal, and its control method.

BACKGROUND ART

Cellular type car systems and portable telephone systems using various communication methods are generally known as wireless telephone systems which communicates by registering position or connecting a line from a wireless mobile terminal to a closest base station.

Conventionally when a call is placed in such a wireless telephone system by registering a position or connecting a line to a base station, the field strength (RSSI level) of control signals of control channels from one or more base stations close by are detected, a base station which transmits a control signal with the higher RSSI level is selected from these base stations, and the position is registered or a line is connected to that base station for communication.

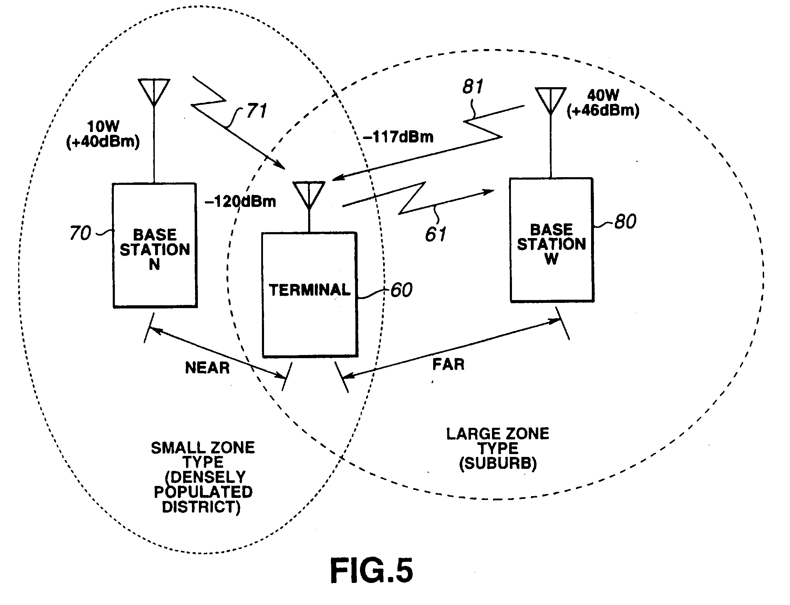

Fig. 5 shows a rough configuration of this type of conventional wireless telephone system.

In Fig. 5, a wireless mobile terminal (hereafter terminal) 60 of this wireless telephone system exists at a position where both a radio wave (control signal) 71 transmitted from a base station N70 with 10W output via a control channel of the base station N70 and a radio wave (control signal) 81 transmitted from a base station W80 with 40W output via a control channel of the base station W80 can be received.

The base station N70, which output is low, is a base station that covers a relatively narrow range (small zone), used for example, in a densely populated district. The base station W80, which output is high, is a base station that covers a relatively wide range (large zone), used for example, in suburbs.

The base station N70 outputs +40 dBm (10W) of radio wave, but the RSSI level of radio wave that the terminal 60 receives is -120 dBm because of propagation loss.

The base station W80, on the other hand, outputs +46 dBm (40W) of radio wave, but the RSSI level of radio wave that the terminal 60 receives is -117 dBm, also because of propagation loss.

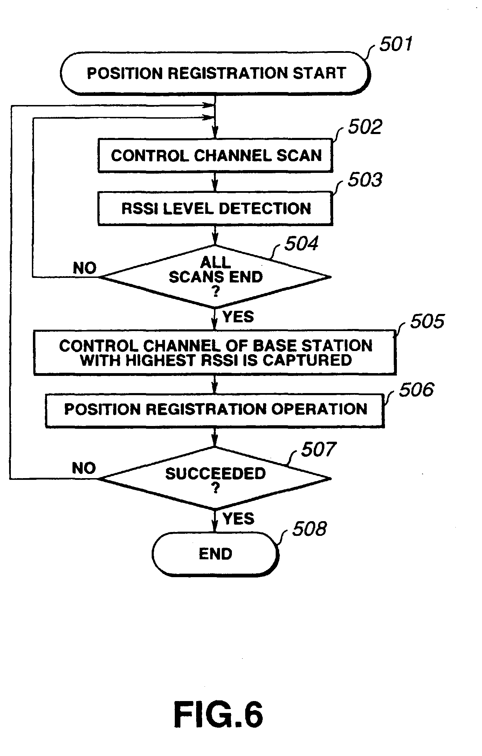

Fig. 6 is a flow chart showing the flow of position registration operation that the terminal 60 shown in Fig. 5 executes.

When the terminal 60 begins position registration operation (Step 501), control channels are scanned first (Step 502), and the RSSI levels of the radio waves (control signals) of the control channels of base stations which the terminal 60 can receive are detected (Step 503).

By the scanning of the control channels, the RSSI level of the radio wave 71 of the control channel that the base station N70 transmits is first detected in Step 503, then it is checked whether the scan of control channels of all base stations that the terminal 60 can receive is completed (Step 504).

If it is judged that the scan of control channels of all base stations that the terminal 60 can receive is not completed (NO in Step 504), the process returns to Step 502, continues scanning of control channels, and detects the RSSI level of a control channel of another base station that this terminal 60 can receive (Step 503).

Because of this, the RSSI level of the radio wave 81 of the control channel transmitted by another base station that the terminal 60 can receive, that is, the base station W80, is detected (Step 503).

When it is judged that the scan of all the control channels that the terminal 60 can receive is completed in this way (YES in Step 504), the control channel of the base station for which the RSSI level is highest out of all the radio waves detected in Step 503 is captured (Step 505).

Here the RSSI level of the radio wave 71 of the control channel that the base station N70 transmits is -120 dBm, while the RSSI level of the radio wave 81 of the control channel that the base station W80 transmits is -117 dBm, therefore the radio wave 81 of the control channel (down stream) of the base station W80 which has the higher RSSI level is captured.

Then the terminal 60 executes position registration operation by transmitting position registration information to the base station W80 using the radio wave 61 of the upstream control channel corresponding to the captured radio wave 81 of the down stream control channel of the base station W80 (Step 506).

Each operation from Step 502 to Step 506 is repeated until the position registration succeeds, and if the position registration succeeds (YES in Step 507), the terminal 60 ends the position registration (Step 508).

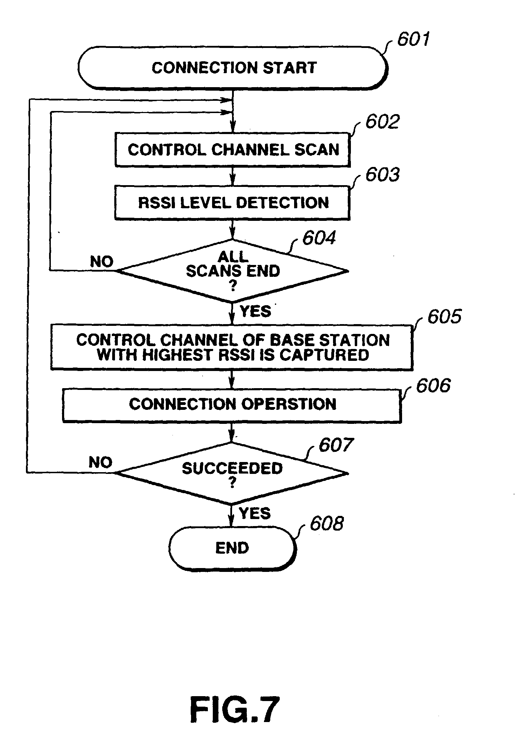

Fig. 7 is a flow chart showing the flow of line connection operation that the terminal 60 shown in Fig. 5 executes.

When the terminal 60 begins connection operation (Step 601), control channels are scanned first (Step 602), and the RSSI levels of the radio waves (control signals) of the control channels of base stations which the terminal 60 can receive are detected (Step 603).

By scanning the control channels, the RSSI level of the radio wave 71 of the control channel that the base station N70 transmits is first detected in Step 603, then it is checked whether the scan of control channels of all base stations that the terminal 60 can receive is completed (Step 604).

If it is judged that the scan of control channels of all base stations that the terminal 60 can receive is not completed (NO in Step 604), the process returns to Step 602, continues scanning control channels, and detects the RSSI level of a control channel of another base station that the terminal 60 can receive (Step 603).

Because of this, the RSSI level of the radio wave 81 of the control channel transmitted by another base station that the terminal 60 can receive, that is, the base station W80, is detected (Step 603).

When it is judged that the scan of all control channels that the terminal 60 can receive is completed in this way (YES in Step 604), the control channel of the base station for which the RSSI level is highest out of all the radio waves detected in Step 603 is captured (Step 605).

Here too, the RSSI level of the radio wave 71 of the control channel that the base station N70 transmits is -120 dBm, while the RSSI level of the radio wave 81 of the control channel that the base station W80 transmits is -117 dBm, therefore the radio wave 81 of the control channel (down stream) of the base station W80 which has the higher RSSI level is captured.

Then the terminal 60 executes line connection operation for connecting a radio line to the base station W80 by transmitting connection information to the base station W80 using radio wave 61 of the upstream control channel corresponding to the captured radio wave 81 of the downstream control channel of the base station W80 (Step 606).

Each operation from Step 602 to Step 606 is repeated until the line connection operation succeeds, and if the line connection operation succeeds (YES in Step 607), the terminal 60 ends the line connection operation (Step 608).

Thus when the terminal 60 executes position registration or line connection to a base station in this type of conventional wireless telephone system, position registration or line connection control is performed to a base station which transmitted the highest RSSI level of radio wave out of the radio waves of control channels received from each base station.

When the terminal executes position registration or line connection control, however, it is not always advantageous for the terminal to select a base station which transmitted the highest RSSI level of radio wave.

In Fig. 5, for example, a base station for which the terminal 60 can execute position registration or line connection under the most advantageous conditions, that is, in the status where the terminal 60 can maintain minimum battery consumption status at minimum power consumption, is the base station N70 which is closest to the terminal 60, but according to the above mentioned conventional method, the RSSI level of the radio wave 71 which the terminal 60 receives from the base station N70 is -120 dBm, while the RSSI level of the radio wave 81 which the terminal 60 receives from the base station W80 is -117 dBm, that is, the RSSI level from the base station W80 is higher than the RSSI level from the base station N70, therefore the terminal 60 captures the control channel, not of the base station N70 but of the base station W80, and executes position registration or line connection.

In this type of conventional wireless telephone system, as described above, the terminal is structured such that a base station to capture a control channel is determined only by the RSSI level of received radio waves, therefore a distant base station may be captured, and in this case, unnecessary power consumption occurs, and in some cases radio waves transmitted by a terminal do not reach the base station due to propagation loss, disabling effective position registration and line connection.

DISCLOSURE OF THE INVENTION

With the foregoing in view, it is an object of the present invention to provide a wireless telephone device which can select the most advantageous base station for position registration or line connection considering propagation loss when a terminal selects a base station for position registration or line connection, and its control method.

To achieve the above mentioned objective, the wireless telephone device of the present invention comprises a plurality of base stations including base stations having different transmission levels; and a wireless mobile terminal connected with said base stations via radio lines, characterized in that: the base station comprises: transmission output information adding means for adding transmission output information indicating a transmission output level of the base station to a control signal to be transmitted to said wireless mobile terminal, and said wireless mobile terminal comprises: control signal capturing means for capturing the control signals with the transmission output information added by said transmission output information adding means of said base stations; receive field strength detecting means for detecting receive field strengths of the control signals captured by said control signal capturing means; transmission output information extracting means for extracting said transmission output information from said control signals captured by said control signal capturing means; correcting means for correcting the field strengths of the control signals detected by said receive field strength detecting means using the transmission output information extracted by said transmission output information extracting means; and selecting means for selecting a base station to communicate with by comparing the receive field strength of the control signal from each base station corrected by said correcting means.

The selecting means may comprise subtracting means for subtracting, from a decibel value of the field strength of the control signal detected by said receive field strength detecting means, a decibel value of the transmission output level of the base station which transmitted the control signal, indicated by the transmission output information extracted by said transmission output information extracting means.

The selecting means may be configured such that the selecting means selects said base station for position registration of said wireless mobile terminal to said base station.

The selecting means may be configured such that selecting means selects the base station for line connection of the wireless mobile terminal to the above base station.

The present invention is also a method for controlling a wireless telephone device comprising a plurality of base stations including base stations having different transmission levels and a wireless mobile terminal connected with said base stations via radio lines, characterized in that the method comprises the steps of: adding transmission output information indicating transmission output levels of said base stations when said base stations transmit control signals to said wireless mobile terminal; by said wireless mobile terminal, capturing the control signals transmitted from said base stations, detecting receive field strengths of the control signals, and extracting the transmission output information added to the control signals; correcting the receive field strengths of said control signals by the transmission output information extracted from the control signals; and selecting a base station to communicate with by comparing the corrected receive field strength of the control signal from each base station.

The present invention is also a wireless mobile terminal connected with a plurality of base stations including base stations having different transmission levels via radio lines, characterized in that the terminal comprises: control signal capturing means for capturing control signals added with transmission output information indicating transmission output levels of the base stations, transmitted from said base stations; receive field strength detecting means for detecting receive field strengths of the control signals captured by said control signal capturing means; transmission output information extracting means for extracting said transmission output information from said control signals captured by said control signal capturing means; correcting means for correcting the field strengths of the control signals detected by said receive field strength detecting means using the transmission output information extracted by said transmission output information extracting means; and selecting means for selecting a base station to communication with by comparing the receive field strength of the control signal from each base station corrected by said correcting means.

## BRIEF DESCRIPTION OF THE DRAWINGS

Fig. 1 is a block diagram depicting a terminal configured by using a wireless telephone device in accordance with the present invention and its control method;
Fig. 2 is a diagram depicting a wireless telephone system configured by using a wireless telephone device in accordance with the present invention and its control method;
Fig. 3 is a flow chart showing a flow of position registration operation which the terminal shown in Fig. 2 executes;
Fig. 4 is a flow chart showing a flow of line connection operation which the terminal shown in Fig. 2 executes;
Fig. 5 is a diagram depicting an example of configuration of the wireless telephone system;
Fig. 6 is a flow chart showing a flow of position registration operation which the conventional terminal shown in Fig. 5 executes; and
Fig. 7 is a flow chart showing a flow of line connection operation which the conventional terminal shown in Fig. 5 executes.

## BEST MODE FOR CARRYING OUT THE INVENTION

An embodiment of the wireless telephone device and its control method in accordance with the present invention will now be described with reference to the accompanying drawings.

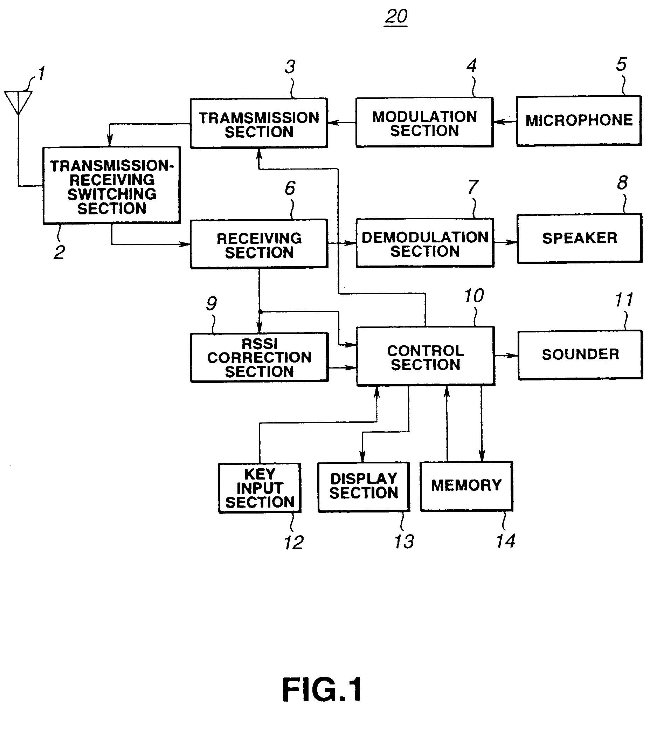

Fig. 1 is a block diagram depicting a terminal configured by using a wireless telephone device in accordance with the present invention and its control method.

In Fig. 1, the terminal 20 comprises an antenna 1, a transmission-receiving switching section 2, a transmission section 3, a modulation section 4, a microphone 5, a receiving section 6, a demodulation section 7, a speaker 8, an RSSI correction section 9, a control section 10, a sounder 11, a key input section 12, a display section 13, and a memory 14.

Here, the terminal 20 has a similar configuration as a conventional terminal except for the RSSI correction section 9, and at transmission, voices which were input from the microphone 5 are modulated by the modulation section 4, and are transmitted from the antenna 1 via the transmission section 3, which is controlled by the control section 10, and the transmission-receiving switching section 2. At receiving, the signals received by the antenna 1 are demodulated by the demodulation section 7 and is output from the speaker 8 as voices via the transmission-receiving switching section 2 and the receiving section 6.

The control section 10 controls the transmission sections based on the signals received by the receiving section 6 and the key input from the key input section 12, outputs an alarm from the sounder 11 if necessary, and displays characters on the display section 13. The memory 14 exchanges information with the control section 10 if necessary.

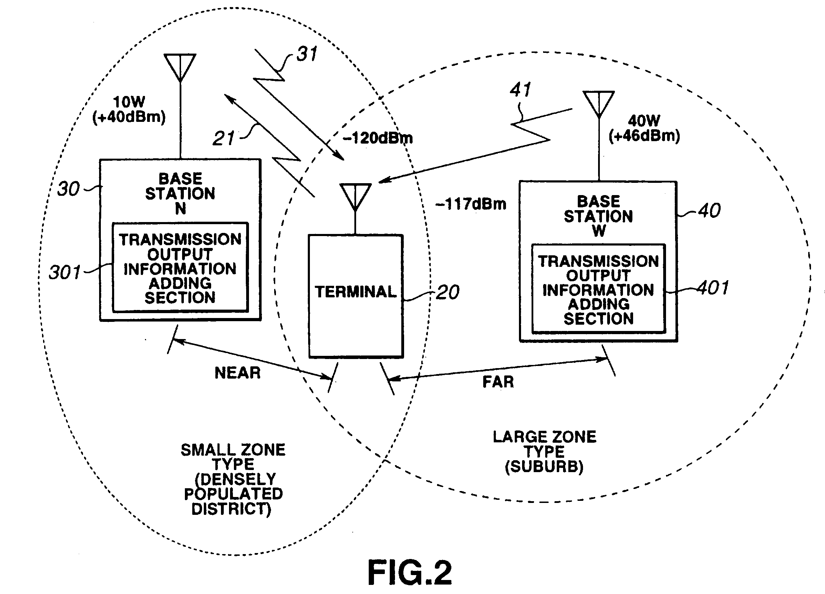

Now operation of the RSSI correction section 9 is described referring to Fig. 2.

Fig. 2 is a diagram depicting a wireless telephone system configured by using a wireless telephone device in accordance with the present invention and its control method.

In Fig. 2, a terminal 20 exists in a position where radio wave 31 transmitted by a small zone type base station N30 with 10W output and radio wave 41 transmitted by a large zone type base station W40 with 40W output can be received.

The base station N30 and the base station W40 have a transmission output information adding sections 301 and 401 respectively, and the transmission output information adding sections 301 and 401 add respective transmission output information to the radio waves (control signals) 31 and 41 which are transmitted to the terminal 20 using respective control channels.

Here the transmission output information to be added by the transmission output information adding sections 301 and 401 is information indicating the transmission output of the respective base stations 30 and 40, and the information is 40 dBm for the base station N30 and 46 dBm for the base station W40.

The RSSI correction section 9 of the terminal 20 shown in Fig. 1 corrects the receive high frequency level (RSSI level) of the received radio wave based on this transmission output information.

Concretely, decibel value x of the RSSI level after correction is given by the formula (1) where the decibel value of the RSSI level of the radio wave which the terminal 20 received is a, and the decibel value of the transmission output of the base station acquired from the transmission output information is b.

$$x = a - b \qquad (1)$$

Therefore, the radio wave 31 for which the RSSI level before correction is -120 dBm is corrected to be -160 dBm because -120 -40 = -160, and the radio wave 41 for which the RSSI level before correction is -117 dBm is corrected to be -163 dBm because -117 -46 = -163.

The RSSI level corrected by the RSSI correction section 9 is a value which is corrected considering the propagation loss caused by the difference of distance between the terminal 20 and the base station N30 or 40, therefore if a base station to which position registration or line connection is executed is selected based on this RSSI level after correction, the terminal 20 can select a base station which is most advantageous for position registration or line connection.

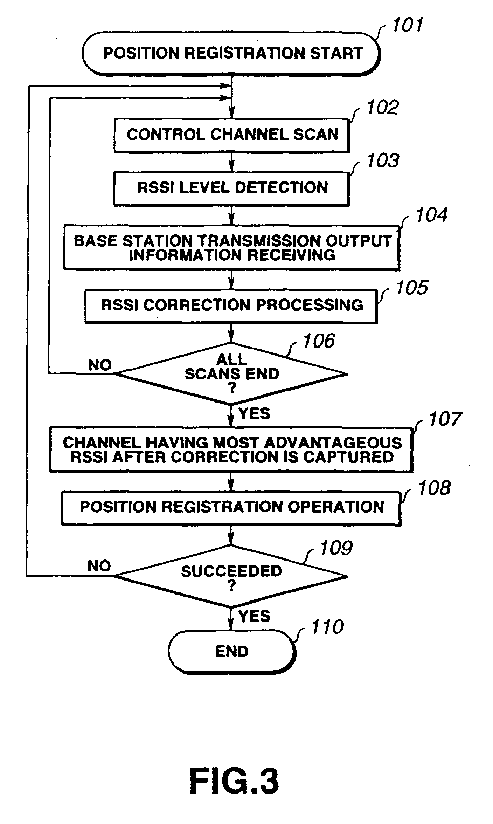

Fig. 3 is a flow chart showing a flow of position registration operation which the terminal 20 shown in Fig. 2 executes.

When the terminal 20 begins position registration operation (Step 101), a control channel is scanned first (Step 102), and the RSSI level of the radio wave (control signal) of the control channel of a base station which the terminal 20 can receive is detected, and the transmission output information added to the radio wave (control signal) of the control channel is received, in other words, extraction is performed (Step 103, 104).

If the RSSI level of the radio wave 31 transmitted by the base station N30 are detected in Step 103, and the transmission output information of the base station N30 which is included in the radio wave 31 transmitted by the base station N30 is detected in Step 104, RSSI correction processing is executed based on this transmission output information and the received -120 dBm of the RSSI level is corrected to -160 dBm (Step 105).

The scanning of a control channel, detection of the RSSI level, extraction of the transmission output information, and RSSI correction processing (Steps 102 to 105) are repeated until scanning of all control channels ends, therefore the RSSI level of the radio wave 41 transmitted by the base station W40 is corrected from -117 dBm to -163 dBm in the same way (Step 105).

When the scanning of all control channels ends (YES in Step 106), radio wave of a control channel for which RSSI is the most advantageous out of all the radio waves corrected in Step 105, that is, radio wave of the control channel (down stream) of the base station for which the corrected RSSI level is highest, radio wave 31 in this case, are captured (Step 107).

Then the terminal 20 transmits position registration information to the base station N30 which transmitted the captured radio wave 31 of the down stream control channel using the radio wave 21 of the upstream control channel corresponding to the radio wave 31 to execute position registration (Step 108).

Each operation from Step 102 to Step 108 is repeated until this position registration succeeds, and when the position registration succeeds (YES in Step 109), the terminal 20 ends this position registration operation (Step 110).

Operation when the terminal 20 shown in Fig. 2 performs line connection is described next.

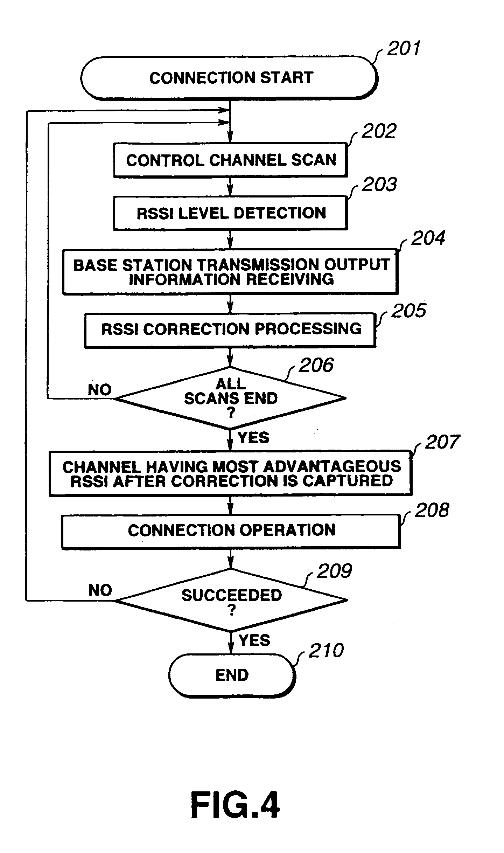

Fig. 4 is a flow chart showing a flow of line connection operation which the terminal 20 shown in Fig. 2 executes.

When the terminal 20 begins connection operation (Step 201), a control channel is scanned first (Step 202), and the RSSI level of the radio wave (control signal) of the control channel of the base station which the terminal 20 can receive is detected, and the transmission output information added to the radio wave (control signal) of the control channel is received, in other words, extraction is performed (Steps 203, 204).

If the RSSI level of the radio wave 31 transmitted by the base station N30 is detected in Step 203, and the transmission output information of the base station N30 which is included in the radio wave 31 transmitted by the base station N30 is detected in Step 204, RSSI correction processing is executed based on this transmission output information and the received -120 dBm of the RSSI level is corrected to -160 dBm (Step 205).

The scanning of a control channel, detection of the RSSI level, extraction of the transmission output information, and RSSI correction processing (Steps 202 to 205) are repeated until scanning of all control channels ends, therefore the RSSI level of the radio wave 41 transmitted by the base station W40 is corrected from -117 dBm to -163 dBm in the same way (Step 205).

When scanning of all control channels ends (YES in Step 206), radio wave of a control channel for which the RSSI level is most advantageous out of all radio waves corrected in Step 205, that is, radio wave of the control channel (down stream) of the base station for which the corrected RSSI level is the highest, radio wave 31 in this case, are captured (Step 207).

Then the terminal 20 transmits line connection information to the base station N30 which transmitted the captured radio wave 31 of the down stream control channel using the radio wave 21 of the upstream control channel corresponding to the radio wave 31 to execute line connection (Step 208).

Each operation from Step 202 to Step 208 is repeated until this line connection succeeds (NO in Step 209), and when the line connection succeeds (YES in Step 209), the terminal 20 ends this line connection operation (Step 210).

In this embodiment, the RSSI level of the received radio wave is corrected by the formula (1) using the transmission output information transmitted from the base station, but it is needless to say that any method for correction may be used, not only the formula (1), but also only if the RSSI level to select the most advantageous base station can be acquired eliminating the influence of propagation loss.

Also in the above embodiment, position registration and line connection from a wireless mobile equipment to a base station was described, but in a system where base stations are switched by control from mobile equipment, that is, in a system where hand-over processing can be performed, base station selection processing in accordance with this invention can be applied to hand-over processing.

INDUSTRIAL APPLICABILITY

This invention provides a wireless telephone device that can select a base station which is most advantageous for position registration or line connection, and a control method therefor. According to this invention, a wireless telephone device capable of selecting a base station most advantageous for position registration or line connection considering propagation loss and a control method therefor are provided, in which the base stations transmit to the terminal control signals added with transmission output information indicating transmission output levels of the base stations, and the terminal corrects RSSI levels of the received radio waves based on the transmission output information, and selects a base station most advantageous for position registration or line connection based on the corrected RSSI levels, thereby selecting a base station most advantageous for position registration or line connection considering propagation loss.

**Claims**

1.  A wireless telephone device comprising:

    a plurality of base stations including base stations having different transmission levels; and
    a wireless mobile terminal connected with said base stations via radio lines, characterized in that:
    the base station comprises:
    transmission output information adding means for adding transmission output information indicating a transmission output level of the base station to a control signal to be transmitted to said wireless mobile terminal, and
    said wireless mobile terminal comprises:
    control signal capturing means for capturing the control signals with the transmission output information added by said transmission output information adding means of said base stations;
    receive field strength detecting means for detecting receive field strengths of the control signals captured by said control signal capturing means;
    transmission output information extracting means for extracting said transmission output information from said control signals captured by said control signal capturing means;
    correcting means for correcting the field strengths of the control signals detected by said receive field strength detecting means using the transmission output information extracted by said transmission output information extracting means; and
    selecting means for selecting a base station to communicate with by comparing the receive field strength of the control signal from each base station corrected by said correcting means.

2.  The wireless telephone device according to Claim 1, characterized in that said correcting means comprises subtracting means for subtracting, from a decibel value of the field strength of the control signal detected by said receive field strength detecting means, a decibel value of the transmission output level of the base station which transmitted the control signal, indicated by the transmission output information extracted by said transmission output information extracting means.

3. The wireless telephone device according to Claim 1, characterized in that said selecting means selects said base station for position registration of said wireless mobile terminal to said base station.

4. The wireless telephone device according to Claim 1, characterized in that said selecting means selects said base station for line connection of said wireless mobile terminal to said base station.

5. A method for controlling a wireless telephone device comprising a plurality of base stations including base stations having different transmission levels and a wireless mobile terminal connected with said base stations via radio lines, characterized in that the method comprises the steps of:

adding transmission output information indicating transmission output levels of said base stations when said base stations transmit control signals to said wireless mobile terminal; by said wireless mobile terminal, capturing the control signals transmitted from said base stations, detecting receive field strengths of the control signals, and extracting the transmission output information added to the control signals; correcting the receive field strengths of said control signals by the transmission output information extracted from the control signals; and selecting a base station to communicate with by comparing the corrected receive field strength of the control signal from each base station.

6. The method for controlling the wireless telephone device according to Claim 5, characterized in that the field strength of said control signal from each base station is corrected by subtracting a decibel value of the transmission output level of the base station indicated by said transmission output information from a decibel value of the field strength of said control signal.

7. The wireless telephone device according to Claim 5, characterized in that said base station is selected for position registration of said wireless mobile terminal to said base station.

8. The wireless telephone device according to Claim 5, characterized in that said base station is selected for line connection of said wireless mobile terminal to said base station.

9. A wireless mobile terminal connected with a plurality of base stations including base stations having different transmission levels via radio lines, characterized in that the terminal comprises:

control signal capturing means for capturing control signals added with transmission output information indicating transmission output levels of the base stations, transmitted from said base stations; receive field strength detecting means for detecting receive field strengths of the control signals captured by said control signal capturing means; transmission output information extracting means for extracting said transmission output information from said control signals captured by said control signal capturing means; correcting means for correcting the field strengths of the control signals detected by said receive field strength detecting means using the transmission output information extracted by said transmission output information extracting means; and selecting means for selecting a base station to communication with by comparing the receive field strength of the control signal from each base station corrected by said correcting means.

10. The wireless mobile terminal according to Claim 9, characterized in that the correcting means performs correction by subtracting the transmission output level detected by said transmission output level information detecting means from the receive high frequency level detected by said receive high frequency level detecting means.

11. The wireless mobile terminal according to Claim 9, characterized in that the selecting means selects said base station for position registration of said wireless mobile terminal to said base station.

12. The wireless mobile terminal according to Claim 9, characterized in that the selecting means selects said base station for line connection to said base station.

**FIG.1**

**FIG.2**

FIG.3

10

CONNECTION START ⌐201

CONTROL CHANNEL SCAN ⌐202

RSSI LEVEL DETECTION ⌐203

BASE STATION TRANSMISSION OUTPUT INFORMATION RECEIVING ⌐204

RSSI CORRECTION PROCESSING ⌐205

ALL SCANS END ? ⌐206    NO

YES

CHANNEL HAVING MOST ADVANTAGEOUS RSSI AFTER CORRECTION IS CAPTURED ⌐207

CONNECTION OPERATION ⌐208

SUCCEEDED ? ⌐209    NO

YES

END ⌐210

# FIG.4

**FIG.5**

40W
(+46dBm)

BASE
STATION
W
80

81

−117dBm

61

−120dBm

71

10W
(+40dBm)

BASE
STATION
N
70

TERMINAL
60

FAR

NEAR

LARGE ZONE
TYPE
(SUBURB)

SMALL ZONE
TYPE
(DENSELY
POPULATED
DISTRICT)

POSITION REGISTRATION START — 501

CONTROL CHANNEL SCAN — 502

RSSI LEVEL DETECTION — 503

ALL SCANS END ? — 504
NO

YES

CONTROL CHANNEL OF BASE STATION WITH HIGHEST RSSI IS CAPTURED — 505

POSITION REGISTRATION OPERATION — 506

SUCCEEDED ? — 507
NO

YES

END — 508

# FIG.6

```
                    ┌──────────────────────────┐  ⟋ 601
                    │    CONNECTION START      │
                    └──────────────────────────┘
                              │
            ┌────────────────→│
         ┌──│───────────────→ ▼
         │  │         ┌──────────────────────┐  ⟋ 602
         │  │         │ CONTROL CHANNEL SCAN │
         │  │         └──────────────────────┘
         │  │                  │
         │  │         ┌──────────────────────┐  ⟋ 603
         │  │         │ RSSI LEVEL DETECTION │
         │  │         └──────────────────────┘
         │  │                  │            ⟋ 604
         │  │   NO         ◇ ALL ◇
         │  └──────────  SCANS END
         │                    ?
         │                    │ YES
         │         ┌──────────────────────────────┐  ⟋ 605
         │         │ CONTROL CHANNEL OF BASE STATION│
         │         │  WITH HIGHEST RSSI IS CAPTURED │
         │         └──────────────────────────────┘
         │                    │
         │         ┌──────────────────────────────┐  ⟋ 606
         │         │     CONNECTION OPERSTION      │
         │         └──────────────────────────────┘
         │                    │            ⟋ 607
         │   NO           ◇        ◇
         └──────────────  SUCCEEDED
                             ?
                             │ YES
                             ▼            ⟋ 608
                    ┌────────────────┐
                    │      END       │
                    └────────────────┘
```

# FIG.7

14

## INTERNATIONAL SEARCH REPORT

| | International application No. |
|---|---|
| | PCT/JP98/02131 |

**A. CLASSIFICATION OF SUBJECT MATTER**
Int.Cl⁶ H04Q7/22

According to International Patent Classification (IPC) or to both national classification and IPC

**B. FIELDS SEARCHED**

Minimum documentation searched (classification system followed by classification symbols)
Int.Cl⁶ H04B7/26, H04Q7/00-7/38

Documentation searched other than minimum documentation to the extent that such documents are included in the fields searched
Jitsuyo Shinan Koho 1926–1998 Toroku Jitsuyo Shinan Koho 1994–1998
Kokai Jitsuyo Shinan Koho 1971–1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 4-117822, A (Nippon Telegraph & Telephone Corp.), April 17, 1992 (17. 04. 92) (Family: none) | 1-12 |
| X | JP, 3-104328, A (Nippon Telegraph & Telephone Corp.), May 1, 1991 (01. 05. 91) (Family: none) | 1-12 |
| X | JP, 5-244073, A (NEC Corp.), September 21, 1993 (21. 09. 93) (Family: none) | 1-12 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| July 23, 1998 (23. 07. 98) | August 4, 1998 (04. 08. 98) |

| Name and mailing address of the ISA/ | Authorized officer |
|---|---|
| Japanese Patent Office | |
| Facsimile No. | Telephone No |

Form PCT/ISA/210 (second sheet) (July 1992)